**Europäisches Patentamt**

**European Patent Office**

**Office européen des brevets**

(19)

(11) Veröffentlichungsnummer: **0 138 097**
**B1**

# (12) EUROPÄISCHE PATENTSCHRIFT

(45) Veröffentlichungstag der Patentschrift:
14.12.88

(21) Anmeldenummer: **84111277.4**

(22) Anmeldetag: **21.09.84**

(51) Int. Cl.⁴: **G 05 D 1/03**

(54) Vorrichtung zur Führung eines gleislosen Fahrzeuges.

(30) Priorität: **01.10.83 DE 3335776**

(43) Veröffentlichungstag der Anmeldung:
**24.04.85 Patentblatt 85/17**

(45) Bekanntmachung des Hinweises auf die Patenterteilung:
**14.12.88 Patentblatt 88/50**

(84) Benannte Vertragsstaaten:
**BE DE FR GB IT NL SE**

(56) Entgegenhaltungen:
**DE-A-2 752 027**
**DE-A-2 941 507**
**DE-A-3 034 659**
**DE-C-2 137 631**

**U.TIETZE-Ch.SCHENK,**
**Halbleiterschaltungstechnik, 1980, Springer-**
**Verlag, Berlin, Heidelberg, New York, pp. 683-687**
**und 701-703**

(73) Patentinhaber: **M A N Technologie GmbH,**
**Dachauer Strasse 667, D-8000 München 50 (DE)**

(72) Erfinder: **Schmidt, Alfred, Dipl.- Ing.,**
**Ostmarkstrasse 16, D-8000 München 70 (DE)**
Erfinder: **Flachenecker, Gerhard, Prof. Dr. Ing.,**
**Bozener Strasse 2, D-8012 Ottobrunn (DE)**

## Beschreibung

Die Erfindung bezieht sich auf eine Vorrichtung zur Führung eines gleislosen Fahrzeugs längs eines eine Fahrbahn markierenden, von einem Wechselstrom durchflossenen Leiters, mit zwei Sensoren, von denen der eine zur Aufnahme der Vertikalkomponente und der andere zur Aufnahme der Horizontalkomponente des vom Wechselstrom verursachten Magnetfeldes unterschiedlicher Frequenzen eingerichtet ist, und einer Auswerteelektronik, die einen Phasenregelkreis PLL aufweist, zum Verarbeiten der Ausgangssignale $U_v$, $U_h$ der Sensoren eingerichtet ist und Steuersignale abgibt, um das Fahrzeug auf einem längs des Leiters verlaufenden Kurs zu halten.

Vorrichtungen dieser Art sind in verschiedenen Variationen bekannt. Ein bewährtes System besteht in der Verwendung von zwei Sensoren zur Abtastung des von einem Leitkabel erzeugten magnetischen Feldes, wobei der eine Sensor auf die horizontale und der andere auf die vertikale Komponente des magnetischen Feldes anspricht. In dieser Anordnung ist der Quotient aus den von den beiden Sensoren abgegebenen Signalen bzw. Spannungen $U_v$, $U_h$ aufgrund der Beziehungen proportional zur horizontalen Abweichung a der Sensoren vom Linienleiter.

$$U_v \sim F_v, \ U_h \sim F_h \text{ und}$$

$$\frac{F_h}{F_v} = \frac{a}{d}$$

proportional zur horizontalen Abweichung a der Sensoren vom kinienleiter.

$F_v$ und $F_h$ sind die vertikale bzw. horizontale Feldkomponente, d ist der vertikale Abstand zwischen dem Sensor und dem Leitkabel.

Unter Nutzung dieses Verhaltens ist eine Vorrichtung aus der DE-PS-2 137 631 bekannt, bei der die Auswerteelektronik zwei, jeweils an einen Sensor angeschlossene Selektivverstärker enthält, die indirekt durch Pegelregelung ein verstärktes Signal erzeugen, das dem Quotient $U_h/U_v$ proportional ist. Die verstärkten Signale werden schließlich zur Erzeugung eines Lenksignales einem phasenabhängigen Gleichrichter zugeführt. Mit einer derartigen Auswerteelektronik lassen sich jedoch nur Signale einer vorbestimmten Frequenz auswerten. Aus der DE-A-2 337 631 ist es bekannt, daß der den Führungsleiter durchfließende Wechselstrom mehrere Frequenzen aufweisen kann. Die Sensoren nehmen daher ein Gemisch verschiedener Frequenzen auf, die von verschiedenen Informationen, redundanten Leitkabeln, Weichen usw. herstammen. Wollte man beispielsweise zur Umleitung des Fahrzeugs auf eine andere Frequenz umschalten, dann waren bei der bekannten Einrichtung zusätzliche Maßnahmen erforderlich.

Bei einer gattungsgemäßen Vorrichtung wird nach der DE-A-2 752 027 ein Oszillator verwendet, der zusammen mit einem nachgeschalteten Zähle- und einer davorgeschalteten Phasenregelstufe eine Phasenregelschleife bildet. Hierbei wird der eigentliche Bezugsoszillator aber nur auf die gewünschte Frequenz nachgezogen. Diese Vorrichtung dient lediglich zur Führung von Fahrzeugen entlang von Leitlinien, die mit Wechselstrom einer Frequenz gespeist sind.

Der Erfindung liegt die Aufgabe zugrunde, diese bekannte Vorrichtung dahingehend weiterzubilden, daß eine baulich sehr einfache und im Betrieb sehr zuverlässige Frequenzumschaltung der Einrichtung möglich ist.

Die Aufgabe wird erfindungsgemäß durch die im Anspruch 1 gekennzeichneten Merkmale gelöst.

Durch die Verwendung eines von einem Sensorsignal angesteuerten Phasenregelkreises PLL ist es in einer einfachen Art möglich, ein mit einer in den Sensorsignalen enthaltenen Frequenz phasenstark gekoppeltes Demodulationssignal zu erzeugen, das gleichzeitig zur Auswertung mehrerer Sensorsignale gleicher Frequenz dient. Hierdurch reduziert sich der Schaltungsaufwand insbesondere, wenn mehrere Antennensignale für die Fahrzeugführung verwendet werden.

Die erfindungsgemäße Auswerteelektronik hat ferner den Vorteil, daß sie ohne die Notwendigkeit von selektiven Filtern, wie bei der bekannten Vorrichtung, lediglich durch Umschalten der Freilauf frequenz des PLL mit verschiedenen Frequenzen betrieben werden kann.

Ein weiterer Vorteil der erfindungsgemäßen Auswerteelektronik ist die Eigenschaft von Phasenregelkreisen, wie sie beispielsweise aus dem Buch F.M. Gardner, Phaselock Techniques, John Wiley + Sons, New York 1979, Seite 2 bekannt sind, daß sie auch bei niedrigem Nutzsignalpegel und gleichzeitig hohem Störpegel noch ein unverrauschtes Ausgangssignal liefern und damit den Arbeitsbereich der Auswerteelektronik erweitern und seine Zuverlässigkeit erhöhen.

Fur die Demodulation der Sensorsignale können einfache Mische oder Demodulatoren anstelle hochwertiger Analogmultiplizierer verwendet werden. Die auf diese Weise demodulierten Signale können anschließend nach einem bekannten Verfahren, beispielsweise durch Quotientenbildung, zu Steuersignalen verarbeitet werden.

Gemäß einer Ausgestaltung der Erfindung ist der PLL mit einem Phasendetektor ausgestattet, dem ein Regler nachgeschaltet ist, der das Ausgangssignal des Phasendetektors in eine geeignete Steuerspannung für einen spannungsgesteuerten Oszillator (VCO) des PLL umformt. Das Ausgangssignal des Oszillators wird als PLL-Signal dem Phasendetektor zugeführt, wobei das PLL-Signal gegenüber dem Sensorsignal für den Phasendetektor um 90° phasenverschoben ist. Dadurch stellt sich am Ausgang des Phasendetektors eine Spannung ein, deren Gleichanteil der Frequenz- bzw. Phasendifferenz zwischen PLLfrequenz und Sensorsignal proportional ist und daher für die Nachregelung bzw. Synchronisation der PLLfrequenz benutzbar ist.

Mit Hilfe der Bandbreite der Reglercharakteristik kann die Bandbreite des PLL in weiten Bereichen eingestellt werden, insbesondere auf extrem schmalbandige Filter, um den notwendigen Frequenzabstand zu verringern, wenn z. B. mehrfrequenzgespeiste Leitkabel verwendet werden.

Ein gegenüber dem PLL-Signal um 90 verschobenes Demodulationssignal kann in einer einfachen Art erzeugt werden, wenn der spannungsgesteuerte Oszillator ein rechteckförmiges Ausgangssignal mit $2^n$-facher PLL-Frequenz erzeugt, wobei ein Kippglied das phasenverschobene Demodulationssignal erzeugt.

Gemäß einer weiteren Ausgestaltung der Erfindung ist das VCO-Signal einem Frequenzzähler zugeführt, womit die PLL-Frequenz überwacht werden kann. Anstelle des VCO-Signales kann auch das PLL-Signal dazu verwendet werden.

Die Verwendung eines Regler mit integralem Anteil bietet den Vorteil, daß geringe Differenzen zwischen Freilauffrequenz und Sensorsignalfrequenz vollständig ausgeregelt werden.

Zur Überwachung von nicht ausgewerteten, im Sensorsignal enthaltenen Frequenzen kann gemäß einer einfachen Ausführung ein Bandpaß mit fester oder umschaltbarer Mittenfrequenz sowie ein Gleichrichter mit Schwellwertdetektor vorgesehen werden, die vom Ausgangssignal des Phasendetektors angesteuert werden. Dies ermöglicht in vorteilhafter Weise, daß z. B. der Anfall redundanter Leitkabelfrequenzen ohne großen Aufwand erkannt werden kann.

Die erfindungsgemäße Ausgestaltung der Elektronik ist insbesondere für Antennensysteme geeignet, bei denen die Sensoren jeweils mindestens eine horizontale und eine vertikale Komponente des magnetischen Feldes abtasten. Hierdurch kann die Verarbeitung durch Quotientenbildung der Sensorsignale angewandt werden.

In der Zeichnung sind Ausführungsbeispiele gemäß der Erfindung im Blockschaltbild schematisch dargestellt.

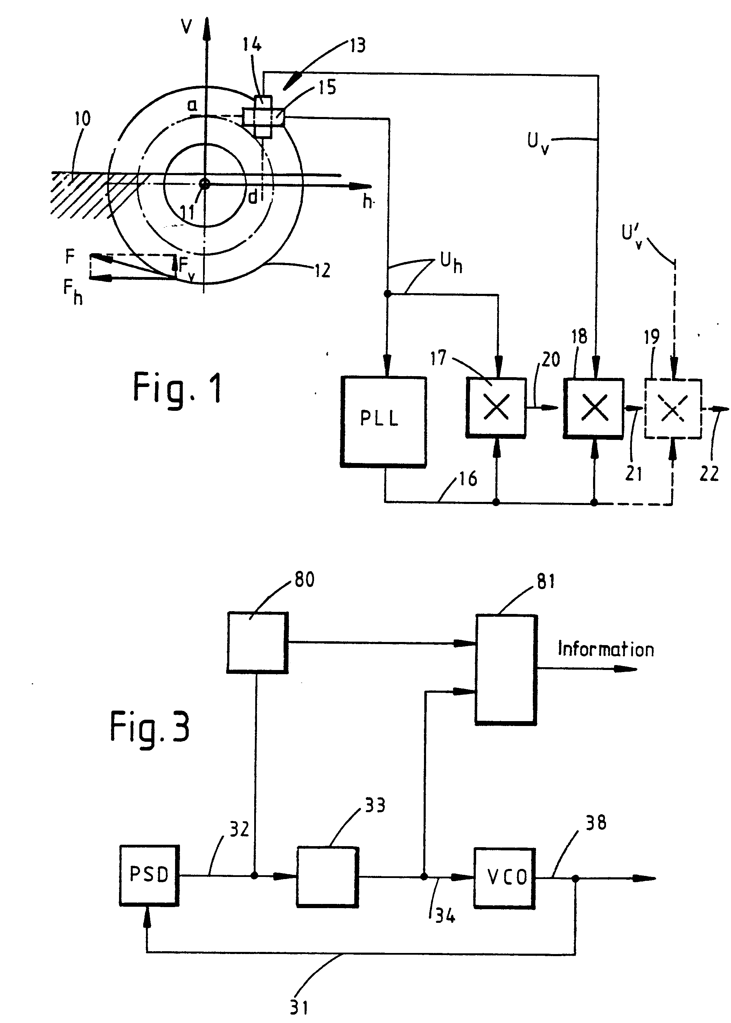

In Fig. 1 deutet die Ziffer 10 eine Fahrbahn an, in der ein Leitkabel 11 angeordnet ist, das aufgrund eines in ihm fließenden Wechselstromes ein Magnetfeld 12 erzeugt, dessen Feldkraft F in orthogonale Feldkomponenten $F_h$ und $F_v$ zerlegbar ist. Das Magnetfeld 12 wird mit einer Kreuzantenne 13 abgetastet, die als einem ersten als vertikal angeordnete Spule ausgebildeten Sensor 14 und einem zweiten, als horizontal angeordnete Spule ausgebildeten Sensor 15 zur Abtastung der jeweiligen Feldkomponente besteht.

Das Spannungsignal $U_h$ des Sensors 15 für die horizontale Komponente $F_n$ wird einerseits zur Erzeugung eines Modulationssignales 16 einem Phasenregelkreis (PLL) zugeführt und andererseits für die Erzeugung von Steuersignalen verwendet.

Mit dem so erzeugten Demodulationssignal 16 lassen sich beliebig viele Sensorsignale $U_h$, $U_v$, $U_v'$ mittels Mischer oder Demodulatoren 17 bis 19 demodulieren, so daß einfache bekannte Verarbeitungsschaltungen verwendet werden können, die die demodulierten Signale 20 bis 22 in entsprechende Steuersignale verarbeiten.

Bei einem in Fig. 1 gezeigten Kreuzantennensystem ist es vorteilhaft, das Signal $U_h$ von der horizontalen Komponente zur Erzeugung des Demodulationssignales 16 zu verwenden, um eine Unabhängigkeit der Positionierung der Antenne 13 beizubehalten, nachdem die horizontale Feldkomponente $F_h$ oberhalb der Fahrbahn 10 immer einen endlichen Wert beibehalten wird. Die vertikale Komponente $F_v$ wird dagegen auf der V-Achse zu Null. In dem hier beschiebenen Beispiel sind orthogonale Feldkomponenten $F_h$ und $F_v$ abtastenden Sensoren 14, 15 vorgesehen, jedoch ist die beschriebene Methode zur Demodulation von Sensorsignalen auch für andere Antennensysteme anwendbar.

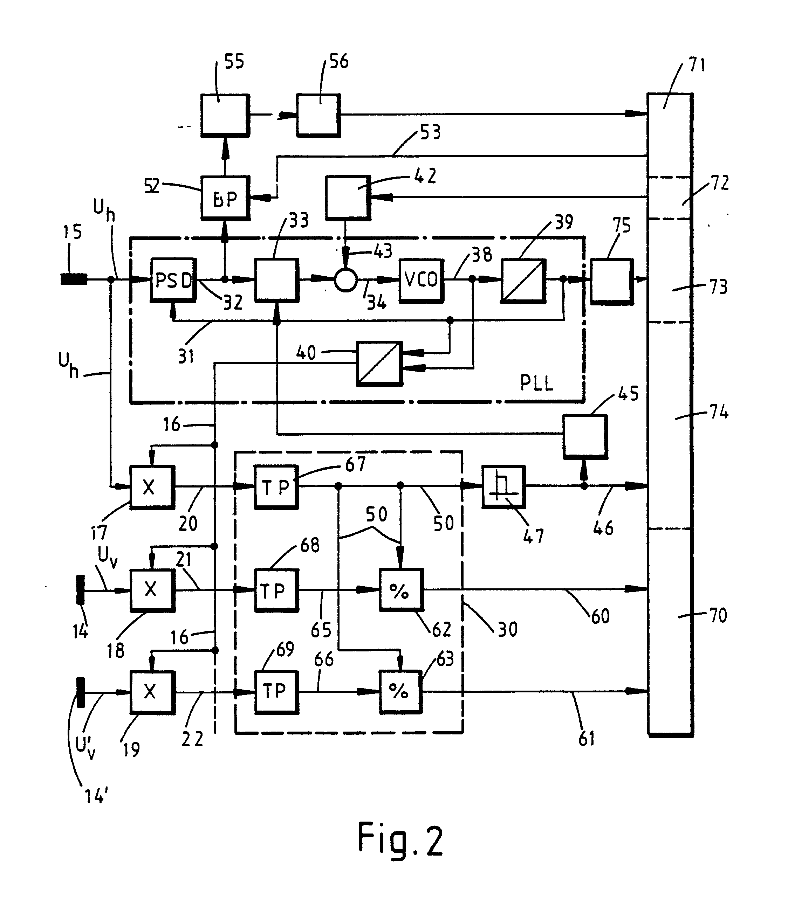

In Fig. 2 ist ein Blockschaltbild mit einer detaillierten Ausführung des PLL und einem Beispiel einer Verarbeitungsschaltung 30 für die demodulierten Sensorsignale 20 bis 21 gezeigt. Der strichpunktiert umrahmte PLL-Kreis enthält an Eingang einen Phasendetektor PSD, der das Sensorsignal $U_h$ mit einem im PLL rückgekoppelten, gegenüber $U_h$ um 90° phasenverschobenen PLL-Signal 31 zur Erzeugung eines Phasendifferenzsignales 32 multipliziert. Im niederfrequenten Bereich des Phasendifferenzsignales 32 sind Signalanteile enthalten, die der Frequenz- bzw. Phasendifferenz zwischen dem PLL-Signal 31 und $U_h$ proportional sind.

Ein dem PSD nachgeschalteter Regler bewertet die Phasendifferenz des Signales 32 im Niederfrequenzbereich und erzeugt eine Steuerspannung 34 für einen spannungsgesteuerten Oszillator VCO. Der Regler 33 reduziert die Phasendifferenz der Steuerspannung 34, bis der PLL-Kreis eingeschwungen ist, wobei die Phasendifferenz bzw. die Reglerdifferenz verschwindet. Dieser Vorgang wird allgemein als Synchronisation bezeichnet. Im eingeschwungenen Zustand ist das PLL-Signal 31 um 90° gegenüber dem Eingangssignal, $U_h$ des PSD verschoben.

Für die Demodulation der Sensorsignale $U_h$, $U_v$ bzw. $U_v'$ wird Phasengleichheit zwischen dem Deinodulationssignal 16 und den Sensorsignalen gefordert, wozu das PLL-Signal um 90° verschoben werden muß. Hierzu ist der VCO so ausgelegt, daß er mindestens in doppelter PLL-Frequenz rechteckförmig schwingt. Aus dem Ausgangssignal 38 des VCO wird dann mit gekoppelten Frequenzteilern 39 und 40 jeweils das PLL-Signal 31 und das Demodulationssignal 16 erzeugt, die miteinander um 90° phasenverschoben sind.

Das auf vorstehend beschriebener Weise erzeugte Demodulationssignal 16 ist stets phasen- und frequenzsynchron mit den Sensorsignalen und kann auf verschiedene Frequenzen umgesteuert werden, sofern die Sensoren 15, 14, 14' Mischsignale mit verschiedenen Frequenzen aufnehmen bzw. erzeugen. Der PLL-Kreis arbeitet nämlich in seiner Funktion einem Bandpaßfilter vergleichbar, dessen Mittenfrequenz durch die Freilauffrequenz des VCO und dessen Charakteristik durch die des Reglers 33 im Niederfrequenzbereich gegeben ist. Somit kann mittels eines Frequenzumschalters 42 die Freilauffrequenz des VCO über eine vom Frequenzumschalter eingespeiste Offsetspannung 43 verändert und damit die Mittenfrequenz der Bandpaßcharakteristik verschoben werden, so daß verschiedene Trägerfrequenzen aus den Sensorsignalen angewählt werden können. Dieses ist besonders wichtig, wenn in der Fahrstrecke des Fahrzuges Weichen befahren bzw. Streckenwechsel durchgeführt werden müssen. Um beim Umschalten der Frequenz des PLL eine Synchronisation zu erreichen, kann über einen Verstärkungsumschalter 45 die Verstärkung des Reglers 34 so geändert werden, daß der Fangbereich bzw. die Bandbreite des PLL verbreitert wird. Die Ansteuerung des Verstärkungsumschalters 45 erfolgt automatisch, durch das Ausganggssignal 46 eines Schwellwertdetektors 47 angesteuert, der das demodulierte und tiefpaßgefilterte Signal 50 des Sensors 15 für die horizontale Feldkomponente überwacht. Ist das Demodulationssignal 16 nicht mit dem Sensorsignal synchron, dann wird das Signal 50 den entsprechend ausgelegten Pegel des Schwellwertdetektors 47 unterschreiten und damit ein Signal 46 ausgegeben, mit dem die Verstärkungsumschaltung 45 zur Erhöhung der Reglerverstärkung angesteuert wird. Ist die Synchronisation erreicht, dann wird das Signal 50 den vorgegebenen Pegel überschreiten, so daß der Verstärkungsumschalter wieder auf reine niedrige Stellung umgeschaltet wird.

Das Ausgangssignal 32 des PSD kann zur Überwachung des PLL-Kreises, zur Überwachung von redundanten Leitkabelfrequenzen, von Weichenfrequenzen ausgewertet werden. Hierzu ist ein Bandpaßfilter 52, dessen Frequenz mit einem Ansteuerungssignal 53 verändert werden kann, vorgesehen, dessen Ausgangssignal hintereinander einem Gleichrichter und einem Schwellwertdetektor zugeführt wird. Das Vorhandensein von Parallelfrequenzen, das Nahen von Abzweigungen usw. können damit überwacht werden.

Für die Auswertung der Sensorsignale 20 bis 22 ist eine an die Kreuzantenne 13 angepaßte Schaltung 30 vorgesehen, die die Steuersignale 60, 61 durch Dividieren von auf unterschiedliche Feldkomponenten zurückgehende Signale erzeugt. Hierzu sind Divisionsschaltungen 62, 63 vorgesehen, deren Eingangssignale Gleichspannungssignale 64 bis 66 sind, die den Sensorspannungen $U_h$, $U_v$, $U_v'$ proportional sind, sind durch Tiefpaßfilterung der demodulierten Signale 20 bis 22 erzeugt werden. Jedem Sensorsignal wird ein Tiefpaßfilter 67, 68 bzw. 69 zugeordnet. Die Abweichungssignale 60, 61 werden auf diese Weise unabhängig voneinander gebildet, so daß das System geeignet ist, mit nur einer horizontalen Abtastung ein teilweise redundantes System durch Verwendung mehrerer Vertikalkomponenten-Abtastungen vorzusehen. Die Abweichungssignale 60, 61 werden einem Lenksystem 70 zur Führung des Fahrzeuges zugeführt. Es sind ferner Kontroll-Anzeigen- und Steuereinheiten 71 bis 74 vorgesehen, die die Synchronisation, die Frequenz, Parallelfrequenzen überwachen, anzeigen bzw. steuern. Die augenblickliche Frequenz des PLL kann mittel seines Frequenzzählers 75 angezeigt werden.

Die Schaltung gemäß Fig. 2 ist ferner geeignet, über das Leitkabel gesandte Informationen aufzunehmen, sofern diese durch Amplituden-, Frequenz- oder Phasenmodulation im Sensorsingal $U_h$ enthalten sind. Dieses kann dadurch erfolgen, daß gemäß Fig. 3 das Ausgangssignal 32 des PSD über einen Tiefpaßfilter 80 und das Ausgangssignal des Reglers 33 direkt einem Informationsdekoder 81 zugeführt werden, der aus einfachen Logikelementen aufgebaut ist.

## Patentansprüche

1. Vorrichtung zur Führung eines gleislosen Fahrzeugs längs eines eine Fahrbahn (10) markierenden, von einem Wechselstrom durchflossenen Leiters (11), mit
- zwei Sensoren (14, 15), von denen der eine zur Aufnahme der Vertikalkomponente und der andere zur Aufnahme der Horizontalkomponente des vom Wechselstrom unterschiedlicher Frequenzen verursachten Magnetfelds F ist, und
- einer Auswerteelektronik, die einen Phasenregelkreis (PLL) aufweist, zum Verarbeiten der Ausgangssignale ($U_v$, $U_h$) der Sensoren eingerichtet ist und Steuersignale abgibt, um das Fahrzeug auf einem längs des Leiters verlaufenden Kurs zu halten,
dadurch gekennzeichnet, daß
- der Eingang des Phasenregelkreises (PLL) an den Ausgang des Sensors (15) für die Horizontalkomponente angeschlossen ist,
- der Phasenregelkreis (PLL) so mit einem Frequenzumschalter (42) verbunden ist, daß der Phasenregelkreis in Abhängigkeit von der mit dem Frequenzumschalter vorgegebenen Frequenz eine bestimmte Eingangsfrequenz bevorzugt und ein mit der in dem Sensorsignal

## 7

enthaltenen vorgegebenen Frequenz phasenstark gekoppeltes Demodulationssignal (16) erzeugt,
- zur Bildung der Steuersignale (60) zwei Synchron-Demodulatoren (17, 18) vorgesehen sind, wobei
- die Synchron-Demodulatoren mit dem Ausgang (16) des Phasenregelkreises (PLL) sowie jeweils an den Ausgang ($U_h$, $U_v$) jeweils eines Sensors (15, 14) angeschlossen sind.

2. Vorrichtung nach Anspruch 1, dadurch gekennzeichnet, daß der Phasenregelkreis (PLL) einen Phasendetektor (PSD) aufweist, dem ein Regler (33) nachgeschaltet ist, der das Ausgangssignal (33) des Phasendetektors in eine geeignete Steuerspannung (34) für einen spannungsgesteuerten Oszillator (VCO) des Phasenregelkreises umformt.

3. Vorrichtung nach Anspruch 2, dadurch gekennzeichnet, daß der spannungsgesteuerte Oszillator (VCO) ein rechteckförmiges Ausgangssignal (38) mit $2^n$-facher PLL-Frequenz erzeugt, daß ein Teiler (39) vorgesehen ist, der das Ausgangssignal (38) des Oszilltors um $2^n$ herunterteilt, und daß ein Kippglied (40) zugleich ein um 90° verschobenes Demodulationssignal (16) erzeugt.

4. Vorrichtung nach Anspruch 2 oder 3, dadurch gekennzeichnet, daß die Freilauffrequenz des VCO mit Hilfe einer durch einen von außen angesteuerten Frequenzumschalter (42) erzeugten Offsetspannung (43) umschaltbar ist.

5. Vorrichtung nach Anspruch 2 oder 3, dadurch gekennzeichnet, daß das VCO-Signal (38) und das PLL-Signal (31) einem Frequenzzähler (75) zur Überwachung der PLL-Frequenz zugeführt wird.

6. Vorrichtung nach Anspruch 2, dadurch gekennzeichnet, daß der Regler (33) des Phasenregelkreises (PL) integrales Verhalten aufweist.

7. Vorrichtung nach Anspruch 1, dadurch gekennzeichnet, daß das Ausgangssignal (32) des Phasendetektors (PSD) einem Bandpaß (52) mit fester oder umschaltbarer Mittenfrequenz und weiter einem Gleichrichter (55) mit Schwellwertdetektor (56) zur gleichzeitigen Überwachung anderer im Sensorsignal ($U_h$) enthaltener Frequenzen zugeleitet wird.

8. Vorrichtung nach Anspruch 1, dadurch gekennzeichnet, daß ein Sensor (15) für die Horizontalkomponente ($F_h$) und mindestens zwei Sensoren (14, 15') für die Vertikalkomponente ($F_v$) des Magnetfeldes (12) vorgesehen sind.

9. Vorrichtung nach Anspruch 7, dadurch gekennzeichnet, daß aus dem Sensorsignal ($U_h$) für die Horizontalkomponente ($F_h$) über einen Schwellwertschalter (47) ein Pegelüberwachungssignal (46) erzeugt wird.

10. Vorrichtung nach Anspruch 9, dadurch gekennzeichnet, daß ein vom Pegelüberwachungssignal (46) angesteuerter Verstärkungsumschalter (45) zur Steuerung der Verstärkung des Reglers (33) vorgesehen ist.

11. Vorrichtung nach einem der

## 8

vorhergehenden Ansprüche, dadurch gekennzeichnet, daß ein Informationsdekoder (81) vorgesehen ist, dem das tiefpaßgefilterte Ausgangssignal (32) des Phasendetektors (PSD) und das Ausgangssignal (34) des Reglers (33) zuführbar sind.

**Claims**

1. Apparatus for guiding a railless vehicle along a conductor (11) which marks a travel path (10) and through which alternating current flows, with
- two sensors (14, 15) one of which is for receiving the vertical component. and the other of which is for receiving the horizontal component of the magnetic field F which is created by alternating current of differing frequencies, and
- an electonic evaluating device which has a phase control circuit (PLL), which is arranged for processing the output signals ($U_v$, $U_h$) of the sensors and which emits control signals in order to maintain the vehicle on a course which travels along the conductor,
characterised in that
- the input of the phase control circuit (PLL) is connected to the output of the sensor (15) for the horizontal component,
- the phase control circuit (PLL) is connected to a frequency changeover switch (42) in such a way that the phase control circuit prefers a particular input frequency in dependence upon the frequency which is predetermined with the frequency changeover switch, and produces a demodulation signal (16) which is coupled in-phase with the predetermined frequency which is contained in the sensor signal,
- for forming the control signals (60), two synchronous demodulators (17, 18) are provided, wherein
- the synchronous demodulators are connected with the output (16) of the phase control circuit (PLL) and also, in each case, to the output ($U_h$, $U_v$) of a sensor (15, 14) in each case.

2. Apparatus according to claim 1, characterised in that the phase control circuit (PLL) has a phase detector (PSD) downstream of which is connected a regulator (33) which converts the output signal (33) of the phase detector into a suitable control voltage (34) for a voltage-controlled oscillator (VCO) of the phase control circuit.

3. Apparatus according to claim 2, characterised in that the voltage-controlled oscillator (VCO) produces a rectangularly-shaped output signal (38) with $2^n$-fold PLL frequency, in that a divider (39) is provided, which downwardly divides the output signal (38) of the oscillator by $2^n$, and in that a rocker member (40) simultaneously produces a demodulation signal (16) which is displaced by 90°.

4. Apparatus according to claim 2 or 3, characterised in that the free-running frequency of the VCO can be switched over with the aid of an offset voltage (43) which is produced by an externally controlled frequency changeover switch (42).

5. Apparatus according to claim 2 or 3. characterised in that the VCO signal (38) and the PLL signal (31) is conveyed to a frequency counter (75) for monitoring the PLL frequency.

6. Apparatus according to claim 2, characterised in that the regulator (33) of the phase control circuit (PLL) displays integral behaviour.

7. Apparatus according to claim 1, characterised in that the output signal (32) of the phase detector (PSD) is conveyed to a band-pass filter (52) with fixed or changeable centre frequency, and furthermore to a rectifier (55) with threshold value detector (56) for simultaneous monitoring of other frequencies which are contained in the sensor signal ($U_h$).

8. Apparatus according to claim 1, characterised in that a sensor (15) for the horizontal component ($F_h$), and at least two sensors (14, 15') for the vertical component ($F_v$) of the magnetic field (12), are provided.

9. Apparatus according to claim 7, characterised in that a level-monitoring signal (46) is produced, through a threshold value switch (47), out of the sensor signal ($U_h$) for the horizontal component ($F_h$).

10. Apparatus according to claim 9, characterised in that an amplification changeover switch (45), controlled by the level-monitoring signal (46), is provided for controlling the amplification of the regulator (33).

11. Apparatus according to one of the preceding claims, characterised in that an information decoder (81) is provided, to which there can be conveyed the low-pass filtered output signal (32) of the phase detector (PSD) and the output signal (34) of the regulator (33).

## Revendications

1. Dispositif de guidage d'un véhicule sans rail, le long d'un conducteur (11) parcouru par un courant alternatif, démarquant une piste de roulement (10), avec:
- deux capteurs (14, 15), dont l'un est disposé pour recevoir la composante verticale et l'autre pour recevoir la composante horizontale du champ magnétique F provoqué par le courant alternatif de fréquence variable, et
- qui possède un dispositif électronique d'exploitation qui comprend un circuit de régulation de phase (PLL), qui est installé pour le traitement des signaux de sortie ($U_v$, $U_h$) des capteurs et qui délivre des signaux de commande, afin de maintenir le véhicule sur une trajectoire se développant le long du conducteur, caractérisé en ce que:
- l'entrée du circuit de régulation de phase (PLL) est raccordée à la sortie du capteur (15) de composante horizontale,
- le circuit de régulation de phase (PLL) est relié à un convertisseur de fréquence (42), de telle sorte que le circuit de régulation de phase produit de préférence une certaine fréquence d'entrée en fonction de la fréquence prédéterminée avec le convertisseur de fréquence et un signal de démodulation (16) couplé en phase rigide avec une fréquence prédéterminée, contenue dans le signal du capteur,
- deux démodulateurs synchrones (17, 18) sont prévus pour former les signaux de commande (60),
- les démodulateurs synchrones étant à cette occasion raccordés à la sortie (16) du circuit de régulation de phase (PLL), ainsi que, chacun, à la sorte ($U_h$, $U_v$) de chacun des capteurs (15, 14).

2. Dispositif selon la revendication 1, caractérisé en ce que le circuit de régulation de phase (PLL) présente un détecteur de phase (PSD), en aval duquel est branché un régulateur (33), qui transforme le signal de sortie (3) du détecteur de phase, en une tension de commande (34) appropriée pour un oscillateur (VCO) commandé en tension du circuit de régulation de phase.

3. Dispositif selon la revendication 2, caractérisé en ce que l'oscillateur (VCO) commandé en tension produit un signal de sortie (38) de forme rectangulaire, avec une fréquence qui est $2^n$ fois celle du PLL, en ce qu'est prévu un diviseur (39) qui divise vers le bas, selon $2^n$, le signal de sortie (38) de l'oscillateur, et en ce qu'un élément de balayage (40) produit simultanément un signal de démodulation (16) décalé de 90°.

4. Dispositif selon la revendication 2 ou 3, caractérisé en ce que la fréquence de marche à vide du VCO est susceptible d'être convertie à l'aide d'une tension de correction produite au moyen d'un convertisseur de fréquence (43) attaqué depuis l'extérieur.

5. Dispositif selon la revendication 2 ou 3, caractérisé en ce que le signal VCO (38) et le signal PLL (31) sont amenés à un compteur de fréquence (75), pour contrôler la fréquence PLL.

6. Dispositif selon la revendication 2, caractérisé en ce que le régulateur (33) du circuit de régulation de phase (PLL) possède un comportement intégral.

7. Dispositif selon la revendication 1, caractérisé en ce que le signal de sortie (32) du détecteur de phase (PSD) est dirigé vers un filtre passe-bande (52) à fréquence de milieu et ensuite vers un redresseur (55) à détecteur de valeur de seuil (56), pour effectuer un contrôle simultané d'autres fréquences contenues dans le signal de capteur ($U_h$).

8. Dispositif selon la revendication 1, caractérisé en ce qu'un capteur (15) est prévu pour la composante horizontale ($F_h$) et au moins deux capteurs (14, 15') sont prévus pour la composante verticale ($F_v$) du champ magnétique (12).

9. Dispositif selon la revendication 7, caractérisé en ce qu'un signal de surveillance de niveau (46) est produit sur un commutateur de valeur de seuil (47), à partir du signal de capteur ($U_h$), pour la composante horizontale ($F_h$).

10. Dispositif selon la revendication 9, caractérisé en ce qu'un commutateur d'amplification (45), attaqué par le signal de surveillance de niveau (46), est prévu pour contrôler l'amplification du régulateur (33).

11. Dispositif selon l'une des revendications précédentes, caractérisé en ce qu'un décodeur d'information (81) est prévu, à qui sont susceptibles d'être amenés le signal de sortie (32) du détecteur de phase (PSD), qui est filtré en passe-bas, et le signal de sortie (34) du régulateur (34).

0 138 097

Fig. 1

Fig. 3

Fig. 2